# EUROPÄISCHE PATENTANMELDUNG

(11) **EP 1 069 546 A2**
(43) Veröffentlichungstag der Anmeldung: **17.01.2001**
(21) Anmeldenummer: 00112819.8
(22) Anmeldetag: 16.06.2000
(51) Int. Cl.: G09B 7/04

(54) **Verfahren zur dezentralen Erstellung eines modular aufgebauten Lernprogramms**

(30) Priorität: 17.06.1999 DE 19927722
(71) Anmelder: MediaAktiv GmbH, Multimediale Informationssysteme, 80337 München (DE)
(72) Erfinder: Schöner, Peter, 82319 Starnberg (DE)
(74) Vertreter: Reinhard - Skuhra - Weise & Partner

(57) **Zusammenfassung**

Verfahren zur dezentralen Erstellung eines modular aufgebauten Lernprogramms mit den folgenden Schritten:
Erzeugen einer Lernprogramm-Beschreibungsdatei zur Beschreibung des zu erstellenden Lernprogramms, die mehrere Lernprogrammmodul-Beschreibungsdatensätze aufweist,
Suchen in einer Lernprogrammmodul-Datenbank (4) nach vorhandenen Lernprogrammmodulen, deren Lernprogrammmodul-Beschreibungsdatensatz mit einem der Lernprogrammmodul-Beschreibungsdatensätze des zu erstellenden Lernprogramms übereinstimmt,
Erzeugen von Leerdrehbuchdateien für jedes Lernprogrammmodul, für das kein übereinstimmender Lernprogrammodul-Beschreibungsdatensatz aufgefunden wurde,
Übertragen der Leerdrehbuchdateien an Lernprogrammmodul-Autoren-Arbeitsstationen (9, 10, 11) entsprechend den Lernprogrammodul-Beschreibungsdatensätzen,
Eingabe von Inhalts- und Anweisungsdaten in die Leerdrehbuchdateien durch den jeweiligen Lernprogrammmodul-Autor zur Erzeugung einer Drehbuchdatei,
Erzeugen von Medienlistendateien aus den Drehbuchdateien, Übertragen der Medienlistendateien an Mediendateihersteller-Arbeitsstationen (15, 16) zur Herstellung von Mediendateien, Verknüpfen der Mediendateien und der Drehbuchdatei zur Erzeugung eines ablauffähigen Lernprogrammmoduls,
Zusammensetzen der in der Lernprogrammmodul-Datenbank(4) aufgefundenen Lernprogrammmodule und der erzeugten ablauffähigen Lernprogrammmodule zu dem modular aufgebauten Lernprogramm (1).

## Beschreibung

Die Erfindung betrifft ein Verfahren zur dezentralen Erstellung eines modular aufgebauten Lernprogramms, insbesondere zur Erstellung von CBT-Lernprogrammen und wahlweise von WBT-Lernprogrammen.

CBT (computer based training) bezeichnet Techniken im Schulungs- und Ausbildungsbereich, bei der Computer bzw. Rechner, insbesondere zusammen mit Multimedia-Systemen, wie CD-ROM-Laufwerken, zu Schulungszwecken genutzt werden. Der Schulungsrechner und der Schüler bzw. die lernende Person befinden sich dabei an einem Ort und der Schulungsrechner ist höchstens lokal vernetzt.

Bei WBT-Lernprogrammen (web based training) kann das Lernprogramm über ein Netzwerk, insbesondere das Internet, durch den Schulungsrechner zu Schulungszwecken heruntergeladen werden.

Derartige Lernprogramme werden vielseitig eingesetzt, beispielsweise zur Schulung von Mitarbeitern innerhalb eines Unternehmens aber auch in zunehmendem Maße zur Schulung von Schülern. Dabei sind die Lerninhalte beliebig und reichen von der Schulung von Mitarbeitern in bestimmten firmenspezifischen Software-Applikationen bis hin zu allgemeinen Lerninhalten für Schüler, wie beispielsweise Sprachen. Die zunehmende Leistungsfähigkeit von Software-Applikationen und der zunehmende Bedarf an Mitarbeitern, die umfangreiche Kenntnisse im Bereich der Datenverarbeitung besitzen, führen dazu, daß die Erstellung von Lernprogrammen zunehmend an Bedeutung gewinnt.

Die Herstellung eines Lernprogramms ist dabei ein komplexer Vorgang, bei dem Fachleute auf den unterschiedlichsten Gebieten zusammenarbeiten. Lernprogramme müssen heutzutage hohen Anforderungen bezüglich ihrer graphischen Ausgestaltung genügen und sollen zusätzlich auch Interaktionen zwischen der lernenden Person und dem Lernprogramm ermöglichen, so daß beispielsweise das Lernprogramm den Wissensstand der lernenden Person durch Aufgabenstellungen überprüfen kann. Das Lernprogramm muß auch didaktische Anforderungen erfüllen, d.h. die Wissensvermittlung soll einfach und effizient erfolgen. Das Lernprogramm muß daher pädagogisch entsprechend der Zielgruppe des Lernprogramms aufbereitet sein und darf beispielsweise bei Anfängern keine zu schwierigen Lerninhalten aufweisen. Darüber hinaus muß das Lernprogramm gleichzeitig Fachwissen vermitteln, so daß neben didaktischen Erfahrungen auch spezielle Kenntnisse, über die nur Experten verfügen, ebenfalls in dem Lernprogramm integriert werden müssen. Die Erstellung eines relativ hochwertigen Lernprogramms erfordert also ein hohes Maß an Arbeitsteilung, wobei pädagogisch ausgebildete Fachleute für die didaktische Ausgestaltung, Experten für die Vermittlung des inhaltlichen Fachwissens, Fachleute für Multimedia-Anwendungen sowie Fachleute für den Produktionsprozeß intensiv zusammenarbeiten müssen.

Bisher wurden derartige Lernprogramme ohne Unterstützung eines vordefinierten Verfahrens anwendungsspezifisch in Teamarbeit erstellt, wobei die verschiedenen Fachleute an der Produktionsstelle des Lernprogramms tätig sind. Bei derartigen Herstellungsverfahren kann daher lediglich das Fachwissen der im Haus vorhandenen Fachleute im Produktionsprozeß eingesetzt werden, und eine Einbindung auch von Fachleuten außerhalb des Herstellungsunternehmens ist nur äußerst schwierig unter Inkaufnahme eines erheblichen Verwaltungsaufwandes sowie Zeitverzögerungen möglich.

Es ist daher die Aufgabe der vorliegenden Erfindung, ein Verfahren zur dezentralen Erstellung eines modular aufgebauten Lernprogramms zu schaffen, das eine schnelle und kostengünstige Erstellung von Lernprogrammen gewährleistet.

Erfindungsgemäß wird diese Aufgabe durch ein Verfahren zur dezentralen Erstellung eines modular aufgebauten Lernprogramms mit den im Patentanspruch 1 angegebenen Verfahrensschritten gelöst.

Weitere vorteilhafte Ausgestaltungen des erfindungsgemäßen Verfahrens ergeben sich aus den Unteransprüchen.

Gemäß der Erfindung wird ein Verfahren zur dezentralen Erstellung eines modular aufgebauten Lernprogramms mit den folgenden Schritten geschaffen:
Erzeugen einer Lernprogramm-Beschreibungsdatei zur Beschreibung des zu erstellenden Lernprogramms, die mehrere Lernprogrammmodul-Beschreibungsdatensätze aufweist,
Suchen in einer Lernprogrammmodul-Datenbank nach vorhandenen Lernprogrammmodulen, deren Lernprogrammmodul-Beschreibungsdatensatz mit einem der Lernprogrammmodul-Beschreibungsdatensätze des zu erstellenden Lernprogramms übereinstimmt,
Erzeugen von Leerdrehbuchdateien für jedes Lernprogrammmodul, für das kein übereinstimmender Lernprogrammodul-Beschreibungsdatensatz aufgefunden wurde,
Übertragen der Leerdrehbuchdateien an Lernprogrammmodulautoren entsprechend den Lernprogrammodul-Beschreibungsdatensätzen,
Eingabe von Inhalts- und Anweisungsdaten in die Leerdrehbuchdatei durch den jeweiligen Lernprogrammmodulautor zur Erzeugung einer Drehbuchdatei,
Erzeugen von Medienlistendateien aus der Drehbuchdatei, Übertragen der Medienlistendateien an den Mediendateihersteller zur Herstellung von Mediendateien,
Verknüpfen der Mediendateien und der Drehbuchdatei zur Erzeugung eines ablauffähigen Lernprogrammmoduls,
Zusammensetzen der in der Datenbank aufgefundenen Lernprogrammmodule und der erzeugten ablauffähigen Lernprogrammmodule zu dem modular aufgebauten Lernprogramm.

Ein Vorteil des erfindungsgemäßen Verfahrens besteht darin, daß die Erstellung der einzelnen Lernmodule durch Fachleute erstellt werden kann, die von dem eigentlichen Produktionsort des Lernprogramms entfernt tätig sind.

Gemäß einer bevorzugten Ausführungsform des erfindungsgemäßen Verfahrens werden die erzeugten ablauffähigen Lernprogrammmodule in der Lernprogrammmodul-Datenbank abgespeichert.

Dies bietet den besonderen Vorteil, daß die bereits erzeugten ablauffähigen Lernprogrammmodul, die in der Datenbank abgespeichert sind, bei der Erstellung eines weiteren Lernprogramms wiederverwendet werden können, sofern der Lernprogrammmodul-Beschreibungsdatensatz des erstellten Lernprogrammmoduls erkennen läßt, daß sich dieses Lernprogrammmodul auf für dieses neue Lernprogramm eignet. Hierdurch wird die überflüssige Mehrfachherstellung von gleichartigen Lernprogrammmodulen mit gleichen Lerninhalten vermieden und somit die Kosten für die Erstellung weiterer Lernprogramme erheblich vermindert.

Bei einer weiteren vorteilhaften Ausgestaltung des erfindungsgemäßen Verfahrens enthält die Lernprogrammmodul-Beschreibungsdatei Strukturdaten, Dateibeschreibungsdaten sowie Modulbeschreibungsdaten.

Dies bietet den besonderen Vorteil, daß das zu erstellende Lernprogrammmodul genau definiert wird und bei der Suche in der Lernprogrammmodul-Datenbank mit unterschiedlichen Suchkriterien leicht auffindbar ist.

Bei einer weiteren vorteilhaften Ausgestaltung des erfindungsgemäßen Verfahrens geben die Strukturdaten die Stellung des Lernprogrammmoduls innerhalb der Gesamtstruktur des zu erstellenden Lernprogramms an.

Dies bietet den besonderen Vorteil, daß beim Zusammenfügen der verschiedenen Lernprogrammmodule zu einem Lernprogramm bereits feststeht, in welcher Reihenfolge die Lernprogrammmodule beim Ablauf des Lernprogramms auftreten.

Bei einer weiteren vorteilhaften Ausgestaltung des erfindungsgemäßen Verfahrens beinhalten die Dateibeschreibungsdaten den Dateinamen, das Dateierstellungsdatum, die Versionsnummer sowie die Namen der verschiedenen Bearbeitungspersonen.

Dies bietet den besonderen Vorteil, daß die Verwaltung der verschiedenen Lernprogrammmodule erheblich vereinfacht wird und feststellbar ist, wer das Lernprogrammmodul erstellt hat. Darüber hinaus kann eine automatische Kontrolle der Lernprogrammversion erfolgen, wodurch insbesondere eine Konsistenz der verwendeten Lernprogrammversionen ermöglicht wird.

Bei einer weiteren vorteilhaften Ausgestaltung des erfindungsgemäßen Verfahrens beinhalten die Modulbeschreibungsdaten den Modultitel, das Modullernziel, die benötigte Modullernzeit sowie die Lernzielgruppe des Moduls.

Dies bietet den besonderen Vorteil, daß das Lernprogramm auf den Personenkreis der lernenden Personen und deren Vorkenntnisse abgestimmt werden kann. Auch bei Wiederverwertung des Lernprogrammmoduls sind die Modulbeschreibungsdaten vorteilhaft verwendbar.

Bei einer weiteren vorteilhaften Ausgestaltung des erfindungsgemäßen Verfahrens enthält die erzeugte Leerdrehbuchdatei Auftragsverwaltungsdaten, die den Namen des Lernprogrammmodulautors, das Datum der Übertragung der Leerdrehbuchdatei an den Lernprogrammmodulautor, das erwartete Datum der Übertragung der Drehbuchdatei sowie den Bearbeitungsstatus beinhalten.

Dies bietet den besonderen Vorteil, daß die Auftragsvergabe an die verschiedenen Autoren zur Erstellung des jeweiligen Lernprogrammmoduls vom Hersteller des Lernprogramms überwacht werden kann.

Bei einer weiteren vorteilhaften Ausgestaltung des erfindungsgemäßen Verfahrens wird der Name des Lernprogrammmodulautors ermittelt, indem eine Modulautor-Datenbank anhand des Lernprogrammmodul-Beschreibungsdatensatzes nach einem geeigneten Lernprogrammmodulautor durchsucht wird.

Dies bietet den besonderen Vorteil, daß der geeignete Lernprogrammmodulautor anhand der Art des zu erstellenden Lernprogammmoduls automatisch ermittelt werden kann, und somit die Auftragsvergabe erleichtert wird.

Bei einer weiteren vorteilhaften Ausgestaltung des erfindungsgemäßen Verfahrens enthält die erzeugte Leerdrehbuchdatei Kundendaten, die den Kunden, für den das Lernprogramm erstellt wird, angeben.

Dies bietet den besonderen Vorteil, daß das Lernprogramm kundenspezifisch erstellt werden kann und schnell in Interaktion mit dem Kunden beschleunigt herstellbar ist.

Bei einer weiteren vorteilhaften Ausgestaltung des erfindungsgemäßen Verfahrens wird die Leerdrehbuchseite hinsichtlich ihres Formats, ihrer Typographie, ihrem Layout und ihrer farblichen Gestaltung durch die Kundendaten festgelegt und ist durch den Leerprogrammmodulautor bezüglich dieser Merkmale nicht veränderbar.

Dies bietet den besonderen Vorteil, daß das gesamte Lernprogramm, das durch das Zusammensetzen der verschiedenen Lernprogrammmodule entsteht, in seinem Gesamterscheinungsbild einheitlich ist, obwohl es durch unterschiedliche Modulautoren erstellt wurde. Darüber hinaus kann gewährleistet werden, daß bestimmte Gestaltungsmerkmale, die für den Kunden typisch sind, beispielsweise die Unternehmensfarben, das Firmenlogo oder dergleichen, in dem Lernprogramm automatisch generiert werden, ohne daß die Autoren mit derartigen Vorgaben belastet werden. Ferner kann der Kunde, der das Lernprogramm in Auftrag gibt, ein Lernprogramm erhalten, daß die Unternehmensidentität bzw. die corporate identity wiederspiegelt.

Der Programmmodulautor muß sich nicht in kundenspezifische Gestaltungsrichtlinien zur Ausgestaltung des Lernprogrammmoduls einarbeiten, wodurch der Arbeitsaufwand bei der Erstellung des Lernprogrammmoduls erheblich vermindert wird. Die Lernprogrammmodule und somit das gesamte Lernprogramm werden hierdurch standardisiert bzw. vereinheitlicht. Vorzugsweise ist zusätzlich ein Template-Editor vorgesehen.

Bei einer weiteren vorteilhaften Ausgestaltung des erfindungsgemäßen Verfahrens wird die Drehbuchdatei mittels eines Drehbucheditors bearbeitet, bei dem die Anweisungsdaten in ein Anweisungseingabefenster eingegeben werden und die Inhaltsdaten in ein Editoreingabefenster eingegeben werden. Inhaltsdaten werden dabei direkt auf den später sichtbaren Bereich des Lernprogrammmoduls eingegeben.

Dies bietet den besonderen Vorteil, daß der Lernprogrammmodulautor neben sichtbaren Lerninhalten bzw. Objekten zusätzlich Anweisungen bzw. Regieanweisungen in die Drehbuchdatei eingeben kann, die bei der Herstellung weiterer Hilfsdateien, insbesondere von Multimediadateien, notwendig sind.

Bei einer weiteren vorteilhaften Ausgestaltung des erfindungsgemäßen Verfahrens werden durch die eingegebenen Inhaltsdaten Text und Graphik sowie Interaktionsobjekte über das Editoreingabefenster erzeugt, die durch den Lernprogrammmodulautor weiter bearbeitbar sind.

Dies bietet den besonderen Vorteil, daß die Lerninhalte des Lernprogramms durch die vielseitige Gestaltung mittels Text, Graphik und Interaktionsobjekten für die lernende Person interessant und abwechslungsreich gestaltet werden können, und über die Interaktionsobjekte durch das Lernprogramm feststellbar ist, ob die lernende Person bestimmte Lernaufgaben lösen kann und somit einen bestimmten Wissensstand besitzt.

Bei einer weiteren vorteilhaften Ausgestaltung des erfindungsgemäßen Verfahrens wird für jedes in dem Editoreingabefenster erzeugte Objekt eine Anweisungstabelle in dem zugehörigen Anweisungseingabefenster erzeugt.

Dies bietet den besonderen Vorteil, daß die Anweisungstabelle durch den Lernprogrammmodulautor nicht selbst erstellt werden muß, sondern automatisch generiert wird. Der Lernprogrammmodulautor kann somit zusätzliche Regieanweisungen zu den jeweils erstellten sichtbaren Datenobjekten eingeben.

Bei einer weiteren vorteilhaften Ausgestaltung des erfindungsgemäßen Verfahrens wird für jedes in dem Editoreingabefenster erzeugte Objekt ein Objektname vergeben, der in der Anweisungstabelle angezeigt wird. Für Objekte, die in der Medienproduktion erstellt werden müssen, wie beispielsweise Graphiken, Audiodateien oder Videodateien, wird vorzugsweise automatisch der Dateiname vergeben.

Dies bietet den besonderen Vorteil, daß der Lernprogrammmodulautor bei der Erstellung der Anweisungstabelle leichter den Überblick bewahrt. Ein weiterer Vorteil besteht darin, daß die Dateien mit ihren entsprechenden Dateinamen automatisch an die richtige Stelle innerhalb des Lernprogrammmoduls importiert werden. Dies ist besonders bei Graphikdateien von Bedeutung.

Bei einer weiteren vorteilhaften Ausgestaltung des erfindungsgemäßen Verfahrens werden in die Anweisungstabelle zusätzliche Dateien bzw. Objekte aufgenommen, die in dem Eingabefenster nicht sichtbar sind, insbesondere Geräuschtonobjekte, Musiktonobjekte, Sprechtextobjekte, Regieanweisungstextobjekte, Aufgabenbeschreibungstextobjekte, Interaktionsbeschreibungstextobjekte.

Dies bietet den besonderen Vorteil, daß die Einbindung von zu erstellenden Multimediadateien in die Drehbuchdatei schnell und einfach erfolgen kann. Durch die automatische Namensvergabe könne alle Multimediadateien zentral verwaltet werden.

Bei einer weiteren vorteilhaften Ausgestaltung des erfindungsgemäßen Verfahrens enthält die Anweisungstabelle der Drehbuchdatei den Objekttyp, eine Objektbeschreibung sowie den Objektnamen.

Bei einer weiteren vorteilhaften Ausgestaltung des erfindungsgemäßen Verfahrens werden die aus der Drehbuchdatei erzeugten Medienlistendateien nach Objekttyp sortiert und abhängig von dem Objekttyp an unterschiedliche Mediendateihersteller übertragen.

Dies bietet den besonderen Vorteil, daß in Abhängigkeit vom Objekttyp die entsprechenden Medienlistendateien an einen zur Herstellung entsprechender Mediendateien spezialisierten Mediendateihersteller geschickt werden können. Beispielsweise werden einem auf Graphiken spezialisierten Mediendateihersteller die Medienlistendateien vom Objekttyp Graphik und einen auf Herstellung von Audiotondateien spezialisierten Mediendateihersteller die Medienlistendateien mit dem Objekttyp Audio zugesandt. Hierdurch wird eine insgesamt förderliche Arbeitsteilung erreicht.

Bei einer weiteren vorteilhaften Ausgestaltung des erfindungsgemäßen Verfahrens wird der Mediendateihersteller mittels Durchsuchen einer Mediendateihersteller-Datenbank ermittelt.

Dies bietet den besonderen Vorteil, daß die Auftragsvergabe zur Erstellung der Mediendateien automatisiert und beschleunigt werden kann.

Bei einer weiteren vorteilhaften Ausgestaltung des erfindungsgemäßen Verfahrens folgt die Übertragung der Leerdrehbuchdateien an die Autoren, die Übertragung der Drehbuchdateien an den Lernprogrammhersteller sowie die Übertragung der Medienlistendateien an die Mediendateihersteller mittels eines Datennetzes oder mittels tragbarer Datenträger.

Dies bietet den besonderen Vorteil, daß die verschiedenen Lernprogrammmodulautoren, der Lernprogrammhersteller sowie die Mediendateihersteller örtlich voneinander getrennt sein können und nicht zentral bei dem Lernprogrammhersteller angesiedelt sein müssen.

Bei einer weiteren vorteilhaften Ausgestaltung des erfindungsgemäßen Verfahrens erfolgt die Übertragung der Dateien über das Internet.

Dies bietet den besonderen Vorteil, daß die Dateiübertragung schnell und sicher über ein weitverbreitetes Datenübertragungsnetz erfolgt und somit die Herstellungszeit für das Lernprogramm insgesamt erheblich reduziert wird.

Bei einer weiteren vorteilhaften Ausgestaltung des erfindungsgemäßen Verfahrens erfolgt das Erzeugen der Lernprogramm-Beschreibungsdatei, das Erzeugen der Leerdrehbuchdatei, das Verknüpfen der Mediendateien und der Drehbuchdatei sowie das Zusammensetzen der Lernprogrammmodule zentral bei einem Lernprogrammhersteller, wohingegen die Drehbuchdateien und die Mediendateien räumlich entfernt dezentral bei Lernprogrammmodulautoren sowie Mediendateiherstellern geschieht.Dies bietet den besonderen Vorteil, daß eine Vielzahl unterschiedlicher Fachleute an entfernt gelegenen Orten in den Herstellungsprozeß miteingebunden werden, wobei gleichzeitig der Produktionsprozeß bzw. die Lernprogrammherstellung zentral durch den Lernprogrammhersteller überwacht werden kann.

Bei einer weiteren vorteilhaften Ausgestaltung des erfindungsgemäßen Verfahrens ist der Bearbeitungsstatus der Drehbuchdateien sowie der Mediendateien durch den Lernprogrammhersteller abfragbar.

Dies bietet den besonderen Vorteil, daß der Lernprogrammhersteller zu jedem Zeitpunkt den Arbeitsfortschritt bei der Erstellung der verschiedenen Module verfolgen kann, und somit sichergestellt ist, daß das Lernprogramm innerhalb der vom Kunden gesetzten Erstellungsfrist rechtzeitig hergestellt wird.

Bei einer weiteren vorteilhaften Ausgestaltung des erfindungsgemäßen Verfahrens wird das zusammengesetzte Lernprogramm auf einen Datenträger übertragen oder ist über ein Datennetz ladbar.

Dies bietet den besonderen Vorteil, daß die Lernpersonen in einfacher weise auf das Lernprogramm zugreifen können.

Das erfindungsgemäße Verfahren zur dezentralen Erstellung eines modular aufgebauten Lernprogramms wird im weiteren unter Bezugnahme auf die beigefügten Zeichnungen zur Erläuterung erfindungswesentlicher Eigenschaften beschrieben.

Es zeigen:
- Fig. 1: eine schematische Darstellung zur Erläuterung des Herstellungsprozesses für ein modular aufgebautes Lernprogramm entsprechend dem erfindungsgemäßen Verfahren;
- Fig. 2: ein Ablaufdiagramm des erfindungsgemäßen Verfahrens zur Erläuterung der einzelnen Verfahrensschritte.

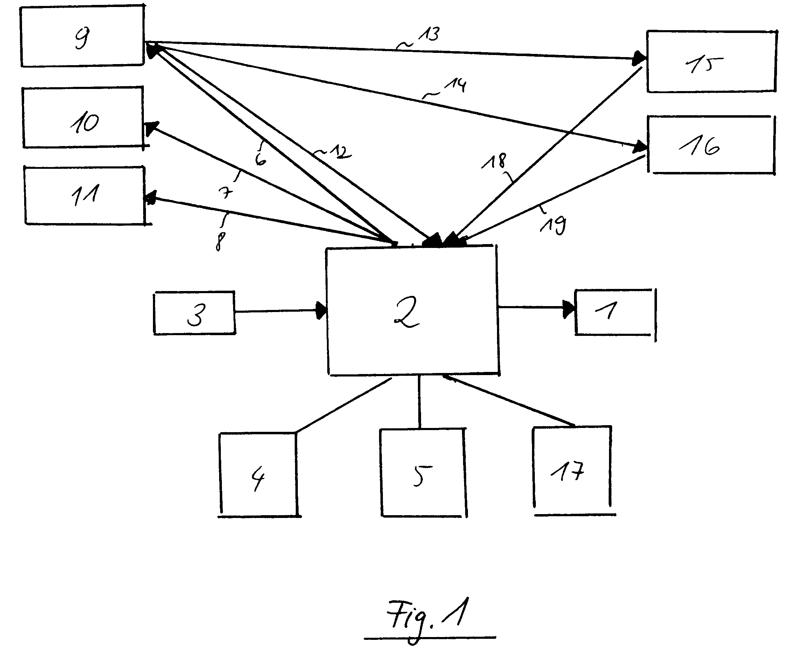

Fig. 1 ist eine schematische Darstellung zur Erläuterung des Herstellungsprozesses für ein modular aufgebautes Lernprogramm gemäß dem erfindungsgemäßen Verfahren

Durch Vernetzen verschiedener dezentraler Produktions-Arbeitsstationen mit einer zentralen Datenverarbeitungsanlage wird ein modular aufgebautes Lernprogramm 1 mit Hilfe einer Datenverarbeitungsanlage 2 des Lernprogrammherstellers erstellt, wobei durch die Datenverarbeitungsanlage 2 die verschiedenen Lernprogrammmodule zu dem Gesamtlernprogramm 1 verknüpft werden. Dies geschieht durch ein sogenanntes Release Manager-Programm innerhalb der Datenverarbeitungsanlage 2, bei der alle für das Lernprogramm 1 benötigten Dateien verknüpft, beispielsweise auf einem Datenträger in Form einer CD-ROM, übertragen werden.

Ein Kunde, der die Erstellung eines Lernprogramms 1 für seine Zwecke wünscht, erstellt auf einer Arbeitsstation 3 eine Kundendatei, beispielsweise eine Kundentextdatei, bei der die Wünsche des Kunden in bezug auf das Lernprogramm 1 angegeben sind. Die Kundendatei wird durch den Lernprogrammhersteller in eine Lernprogramm-Beschreibungsdatei umgesetzt, wobei die Lernprogramm-Beschreibungsdatei mehrere Lernprogrammmodul-Beschreibungsdatensätze enthält. Jeder Lernprogrammmodul-Beschreibungsdatensatz enthält Strukturdaten, die die Stellung des Lernprogrammmoduls innerhalb der Gesamtstruktur des zu erstellenden Lernprogramms 1 angibt, Dateibeschreibungdaten, die den Dateinamen, das Dateierstellungsdatum, die Versionsnummer sowie den Namen der Bearbeitungspersonen beinhalten sowie Lernprogrammmodul-Beschreibungsdaten, die den Modultitel, das Modullernziel, die benötigte Modullernzeit sowie die Zielgruppe des Lernprogrammmoduls beinhalten.

Ein typisches Lernprogramm kann beispielsweise ein Lernprogramm sein, bei dem die Benutzung der Computermaus durch einen Computernutzer ohne jegliche Vorkenntnisse im Bereich der EDV erlernt werden soll. Ein derartiges Lernprogramm 1 wird dabei modulartig aufgebaut und besteht aus mehreren Ebenen, beispielsweise vier modulartig aufgebauten Ebenen. Für die lernende Person erscheinen diese Ebenen beispielsweise als Kapitel, Unterkapitel, Abschnitt und Unterabschnitt innerhalb der Gesamtstruktur des Lernprogramms 1. Je nach Schwierigkeit des Lerninhalts wird das Lernprogramm hierarchisch in Ebenen bzw. Kapiteln unterteilt. Bei einem relativ einfachen Lerninhalt, wie beispielsweise die Bedienung einer Computermaus sind beispielsweise nur drei Ebenen, nämlich Kapitel "Die Maus", als Unterkapitel "Die Bestandteile der Maus" und "Die Funktion der Maus" notwendig, wobei das erste Unterkapitel "Die Maus" umfaßt, und das zweite Unterkapitel beispielsweise mehrere Abschnitte, nämlich "Einfacher Klick", "Doppelklick", "Drag and Drop" sowie "Der Mausball", enthält. Diese Gesamtstruktur des Lernprogramms "Die Maus" wird in den Strukturdaten innerhalb der Lernprogramm-Beschreibungsdatei abgespeichert, wobei das oben beschriebene Beispiel für ein Lernprogramm als unterste Ebene fünf Lernprogrammmodule, nämlich "Die Maustasten", "Einfacher Klick", "Doppelklick", "Drag and Drop", "Der Mausball", aufweist. Darüber hinaus weist die Lernprogrammmodul-Beschreibungdatei Daten auf, die die Datei selbst beschreiben, nämlich den Dateinamen, das Dateierstellungsdatum, die Versionsnummer, mit welcher die Datei erstellt wurde, sowie die Namen der Bearbeitungspersonen, beispielsweise einen Erst- und Zweibearbeiter. Dies erleichtert die Verwaltung der Lernprogrammmodule erheblich und beschleunigt insgesamt die Erstellung des Lernprogramms.

Ferner enthält die Lernprogramm-Beschreibungdatei Modulbeschreibungsdaten, wie den Lernprogrammmodultitel, das Modullernziel, die benötigte Modullernzeit sowie die Zielgruppe des Lernmoduls.

Das Ziel des oben genannten Lernprogramms "Die Maus" könnte beispielsweise lauten: "Der Lerner soll mit der Maus am Computer umgehen können". Die dafür veranschlagte Modullernzeit beträgt beispielsweise 10 Minuten, wobei als Zielgruppe für dieses Lernmodul lernende Personen ohne irgendwelche Vorkenntnisse innerhalb der EDV vorgesehen ist.

Jedes Lernprogrammmodul weist eine eigene Lernprogrammmodul-Beschreibungsdatei auf, wobei beispielsweise das Lernprogrammmodul "Die Maustasten" als Abschnitt des Unterkapitels "Bestandteile der Maus", als Modullernziel eine Lernzielbeschreibung enthält, wie etwa "Die lernende Person soll die verschiedenen Tasten einer Maus kennenlernen". Die Modulbeschreibungsdaten können ferner eine Lernzieltiefe angeben, bei der Daten enthalten sind, die die Lernzieltiefe stufenweise angeben, beispielsweise Einführung, Wissen, Verstehen, Anwenden. Ferner können die Modulbeschreibungsdaten Quellenangaben und Suchschlagwörter enthalten.

Nachdem die Lernprogrammmodul-Beschreibungsdatei durch die Datenverarbeitungsanlage 2 aus den Kundendaten erstellt worden ist, wird anhand der Modulbeschreibungsdaten in einer an die Datenverarbeitungsanlage 2 angeschlossenen Lernmodul-Datenbank 4 nach bereits erstellten Lernprogrammmodulen gesucht, die den gesuchten Modulkriterien genügen. In der Lernprogrammmodul-Datenbank 4 wird beispielsweise ein bereits erstelltes Lernprogrammmodul aufgefunden, bei dem der Umgang mit den Maustasten für Anfänger bereits beschrieben ist. Ein derartiges Lernprogrammmodul muß dann zur Erstellung des Lernprogamms 1 nicht mehr erstellt werden. Hierdurch wird verhindert, daß Lernprogrammmodule mit ähnlichen oder gleichen Lerninhalten nicht überflüssigerweise mehrfach erstellt werden, wodurch die Kosten der Lernprogrammherstellung mit zunehmendem Datenbankbestand erheblich abgesenkt werden können. Bei der Lernprogrammmodul-Datenbank handelt es sich vorzugsweise um eine interne Datenbank des jeweiligen Lernprogrammherstellers, aber auch der Zugriff auf eine Datenbank eines externen Datenbankanbieters ist möglich.

Nachdem die Lernprogrammmodul-Datenbank 4 nach geeigneten Lernprogrammodulen durch die Datenverarbeitungsanlage 2 durchsucht worden ist, wird für jedes Lernprogrammmodul, das kein übereinstimmender Lernprogrammmodul-Beschreibungsdatensatz innerhalb der Lernprogrammmodul-Datenbank 4 aufgefunden wurde, eine Leerdrehbuchdatei generiert, die "leer" ist, da sie noch keine Lerninhalte enthält. Die erzeugte Leerdrehbuchdatei enthält vorzugsweise Auftragsverwaltungsdaten, die den Namen des beauftragten Lernprogrammmodulautors, das Datum der Übertragung der Leerdrehbuchdatei an den Lernprogrammmodulautor, sowie den Bearbeitungsstatus beinhalten. Dabei wird der Name des Lernprogrammmodulautors vorzugsweise ermittelt, indem eine Modulautor-Datenbank 5 anhand des Lernprogrammmodul-Beschreibungsdatensatzes nach einem geeigneten Lernprogrammmodulautor durchsucht wird. Beispielsweise enthält die Lernprogrammmodul-Beschreibungsdatei Modulbeschreibungsdaten, die angeben, daß das Lernprogrammmodul Computer betrifft, und es werden durch die Modulautor-Datenbank 5 lediglich diejenige Modulautoren ausgegeben, die Computerexperten sind. Betrifft das Lernprogramm beispielsweise eine Fremdsprache werden aufgrund der Modulbeschreibungsdaten die Modulautor-Datenbank 5 lediglich diejenigen Modulautoren ausgegeben, die Lernprogrammmodule über diese bestimmte Fremdsprache erstellen können. Nachdem die Datenverarbeitungsanlage 2 durch die Modulautor-Datenbank 5 den geeigneten Modulautor für dieses Lernprogrammmodul ermittelt hat, wird eine Leerdrehbuchdatei für dieses Lernprogrammmodul erstellt und an die entsprechende Arbeitsstation des entsprechenden Modulautors mit dem entsprechenden Erstellungsauftrag beispielsweise per Internet verschickt.

In dem in Fig. 1 gezeigten Beispiel werden zur Erstellung des Lernprogramms 1 drei Leerdrehbuchdateien erzeugt, die über die Leitungen bzw. mittels tragbarer Datenträger 6, 7, 8 an die Arbeitsstationen 9, 10, 11 verschiedener Lernprogrammmodulautoren A, B, C verschickt. Der Modulautor A erstellt an der Arbeitsstation 9 ein erstes Lernprogrammmodul, beispielsweise das Lernprogrammmodul "Drag and Drop" für das Lernprogrammm 1. Die Modulautoren B, C erstellen an den Arbeitsstationen 10, 11 andere Lernprogrammmodule für das Lernprogramm 1, beispielsweise das Lernprogrammmodul "Doppelklick" oder das Lernprogrammmodul "Der Mausball". Hierdurch wird einerseits erreicht, daß der jeweils geeignetste Modulautor für das spezielle Lernthema tätig wird, und andererseits wird eine Parallelisierung der Herstellungsabläufe ermöglicht, wodurch insgesamt die Erstellungszeit für das Lernprogramm erheblich vermindert wird.

Eine Leerdrehbuchdatei kann mehrere Leerdrehbuchseiten enthalten, wobei die jeweiligen Leerdrehbuchseiten hinsichtlich ihres Formats, ihrer Typographie, ihrem Layout, ihrer farblichen Gestaltung, ihrem Rasterabstand und den verwendeten Schrifttypen durch die in der Datenverarbeitungsanlage abgespeicherten Kundendaten festgelegt sind, und die Modulautoren A, B, C die Gestaltung der Drehbuchseiten diesbezüglich nicht verändern können. Hierdurch wird gewährleistet, daß das Lernprogramm 1, das durch die Lernprogrammmodule zusammengesetzt ist, aus der Sicht der lernenden Person ein einheitliches Erscheinungsbild hat. In einem ersten Lernprogrammmodul können somit keine anderen Schrifttypen und Farben verwendet werden, als in einem beliebigen anderen Lernprogrammmodul. Darüber hinaus ist durch diese Festlegung gewährleistet, daß Kundenwünsche bezüglich der Gestaltung des Lernprogramms in bezug auf dessen Erscheinungsbild weitestgehend berücksichtigt werden können, ohne daß die Modulautoren A, B, C darauf achten müssen. Dies stellt für die Modulautoren eine erhebliche Arbeitserleichterung dar, da sie sich auf die Lerninhalte konzentrieren können und sich nicht mit formalen Gesichtspunkten der graphischen Ausgestaltung des Lernprogramms 1 beschäftigen müssen. Wünscht ein Kunde beispielsweise stets einen bestimmten Schrifttypensatz, wie "Arial", so wird dieser in der Leerdrehbuchdatei durch die Datenverarbeitungsanlage 2 automatisch generiert und für die Modulautoren besteht keine Möglichkeit, einen anderen Schrifttypensatz zu verwenden.

Nachdem der Modulautor A an der Arbeitsstation 9 die Leerdrehbuchdatei 6 von der Datenverarbeitungsanlage 2 des Lernprogrammnherstellers erhalten hat, gibt er Inhalts- und Anweisungsdaten in die Leerdrehbuchdatei zur Erzeugung einer fertigen Drehbuchdatei 12 aus. Die Drehbuchdatei 12 wird mittels eines sogenannten Drehbucheditors erzeugt, der ein Anweisungseingabefenster und ein Editoreingabefenster besitzt.

Die Anweisungsdaten werden in das Anweisungseingabefenster durch den Modulautor eingegeben, und die Inhaltsdaten für das Lernprogrammmodul werden in das Editoreingabefenster durch den Modulautor eingegeben. Die eingegebenen Inhaltsdaten umfassen Textobjekte, Graphikobjekte sowie Interaktionsobjekte. Der Modulautor ordnet hierzu die verschiedenen Objekte auf dem ihm angezeigten Editoreingabefenster an, indem er eine Überschrift als Textobjekt sowie weitere Textblöcke auf dem Bildschirm plaziert. Hierdurch können sogenannte Templates, automatische Muster und vorgegebene Text-, Graphik-Anordnungen erzeugt werden.

Darüber hinaus kann er auf dem Editoreingabefenster einen Bereich definieren, in dem ein Graphikobjekt erscheinen soll. Die Graphikobjekte können beispielsweise durch eine Bildbeschreibung durch den Modulautor erläutert werden, oder in Form von sogenannten scribbels (Skizzen) erfolgen, wobei die spätere vollendete Graphik durch den Modulautor nur skizzenhaft gezeichnet wird. Ferner kann der Autor Interaktionsobjekte, wie Eingabefelder oder Klickfelder (check box) oder Aufgabenfelder definieren.

Für die im Editoreingabefenster erzeugten sichtbaren Objekte wird automatisch in dem Anweisungseingabefenster eine Tabelle generiert, die den Objekttyp, eine Objektbeschreibung und den Objektnamen angibt. Hat der Autor beispielsweise im Editoreingabefenster ein Graphikobjekt definiert, wird diesem Objekt automatisch ein systeminterner Objektname für ein Objekt vom Objekttyp "Graphik" verliehen , wobei die Objektbeschreibung beispielsweise lautet "eine Maus von oben mit hervorgehobenen Maustasten". Der Modulautor, der die Drehbuchdatei erstellt, muß also nicht selbst die Graphik erstellen, sondern er skizziert sie entweder als Scribbel oder beschreibt sie allgemein in dem Anweisungseingabefenster als Objektbeschreibung. Die Erstellung der letztendlichen in dem Lernprogramm vorhandenen Graphik erfolgt durch einen Spezialisten, nämlich einem Mediendateihersteller, der auf die Erzeugung von Graphiken bzw. technischen Zeichnungen spezialisiert ist.

Der Drehbucheditor kann verschiedenste Objekttypen mit verschiedensten Untertypen unterscheiden. Graphikobjekte können unterteilt werden in sogenannte Screenshots, Photo, Illustration, Animation, Video und Endbild. Interaktionsobjekte umfassen Eingabefelder und Klickfelder. Weitere nicht im Editoreingabefenster angezeigten Objekte können durch den Lernprogrammmodulautor durch Ergänzen der Anweisungstabelle innerhalb des Anweisungsfensters aufgenommen werden. Dies sind insbesondere Geräuschtonobjekte, Musiktonobjekte, Sprechertextobjekte, Regieanweisungstextobjekte, Aufgabenbeschreibungstextobjekte, Interaktionsbeschreibungstextobjekte.

Der Lernprogrammmodulautor kann beispielsweise eine Regieanweisung geben, daß ein Sprechertextobjekt vorhanden ist, wobei z.B. der Sprechertext "die Maus hat meistens zwei verschiedene Tasten" der lernenden Person im Ablauf des Lernprogramms 1 akustisch mitgeteilt wird. Die hierzu notwendige Tondatei wird ebenfalls nicht durch den Modulautor selbst erstellt, sondern durch einen auf die Herstellung von Tondateien spezialisierten Mediendateihersteller für Audiotondateien. Der Modulautor gibt lediglich die Regieanweisung innerhalb des Anweisungsfensters, daß ein bestimmter Sprechertext im Lernprogramm akustisch durch die lernende Person aufgenommen werden soll. Das Lernprogramm kann auf verschiedenste Weise durch den Modulautor interessant und vielseitig gestaltet werden, indem er Geräusche, Hintergrundmusik, Sprechertexte einbaut.

Auch Interaktionen oder Aufgabenbeschreibungen können durch den Autor in das Anweisungsfenster eingegeben werden. Solche Interaktionen bestehen etwa aus der Beschreibung eines Objekts, bei dem der Kunde selbst Texte aufspricht bzw. eingibt oder aus Alternativvorgänge, die durch Markierungen, welche in Abhängigkeit von der Interaktion des Benutzers ablaufen, definiert werden, oder aus Pausen in dem Lernprogramm, die beispielsweise durch die Beschreibung der Zeitdauer der Pause festgelegt werden. Der Autor hat daher, wenngleich er nicht über umfangreiche Multimediaerfahrungen verfügt, die Möglichkeit, das Lernprogramm aufgrund seiner didaktischen Kenntnisse und seinem Fachwissen sehr abwechslungsreich und interessant zu gestalten.

Die vollendete Drehbuchdatei des Lernprogrammmoduls wird nach ihrer Erstellung durch den Modulautor an die Datenverarbeitungsanlage 2 zurückgesendet, und gleichzeitig werden verschiedene Medienlistendateien aus der Drehbuchdatei generiert, die an Mediendateihersteller übertragen werden.

Ist beispielsweise, wie in Fig. 1 gezeigt, durch den Modulautor A an der Arbeitsstation 9 die über den Übertragungsweg 6 zugeführt Leerdrehbuchdatei mit Lerninhalten gefüllt worden und als fertige Drehbuchdatei über den Übertragungsweg 12 wieder an die Datenverarbeitungsanlage 2 zurückgesendet worden, so wird gleichzeitig über den Übertragungsweg 13, 14 jeweils eine Medienlistendatei an die Arbeitsstation 15 eines ersten Mediendateiherstellers und die Arbeitsstation 16 eines zweiten Mediendateiherstellers übersandt.

In dem in Fig. 1 gezeigten Beispiel enthält die durch den Modulautor A generierte Drehbuchdatei für ein erstes Lernprogrammmodul verschiedene Graphiken, die einem Mediendateihersteller für Graphik an der Arbeitsstation 15 zugesandt wird. Die Medienlistendatei gibt tabellenartig den Objekttyp, den Objektnamen, die Drehbuchseite, die Beschreibung sowie die Größe der Graphik an. Beispielsweise enthält die Medienlistendatei ein Graphikobjekt auf der Drehbuchseite 2 der Drehbuchdatei mit einer Breite von 303 mm und einer Höhe von 210 mm, wobei das Graphikobjekt gerne in der Graphikbeschreibung mit "eine Maus von oben mit hervorgehobenen Maustasten" beschrieben wird. Der Mediendateihersteller für Graphik erhält an der Arbeitsstation 15 die Medienliste und kann anhand der in der Medienliste aufgeführten Angaben die verschiedenen Graphiken für die jeweilige Drehbuchdatei erstellen. Da der Mediendateihersteller ein Spezialist bei der Herstellung von Graphiken ist, kann er die Graphiken viel schneller und optisch ansprechender gestalten als es dem Modulautor selbst möglich wäre. Die Übertragung der Medienlistendatei kann mittels eines tragbaren Datenträgers oder über ein Datennetz, insbesondere dem Internet, erfolgen.

Die Auswahl des geeigneten Mediendateiherstellers kann vorzugsweise durch die Datenverarbeitungsanlage 2 erfolgen, die eine Mediendateihersteller-Datenbank 17 nach einem geeigneten Mediendateihersteller durchsucht. Bei dem in Fig. 1 gezeigten Beispiel weist die Drehbuchdatei Sprechertexte auf, und es wird eine Audio-Medienlistendatei generiert, die der Arbeitsstation 16 eines Audio-Mediendateiherstellers zugesandt wird. Der Audiodateihersteller stellt in seinem Tonstudie beispielsweise den Sprechertext "die Maus hat meistens zwei verschiedene Tasten" her. Die durch die Mediendateihersteller an ihren Arbeitsstationen 15, 16 hergestellten Mediendateien werden, wie durch Bezugszeichen 18, 19 angedeutet, über ein Datennetz oder mittels tragbarer Datenträger an den Lernprogrammhersteller und dessen Datenverarbeitungsanlage 2 übertragen. Die Datenübertragung der Mediendateien erfolgt vorzugsweise über das Internet.

Wie aus Fig. 1 hervorgeht, können die verschiedenen Modulautoren an den Arbeitsstationen 9, 10, 11 und die verschiedenen Mediendateihersteller an den Arbeitsstationen 15, 16 dezentral von dem Lernprogrammhersteller und dessen Datenverarbeitungsanlage 2 angesiedelt sein. Die gezeigte Struktur ermöglicht daher sowohl eine Parallelisierung der Arbeitsabläufe als auch eine wirkliche Dezentralisierung. Daher ist das Verfahren zur Erstellung des Lernprogramms 1 sehr flexibel und ermöglicht die Einbindung einer Vielzahl von Fachleuten und Spezialisten in den Erstellungsprozeß, ohne daß diese vor Ort beim Lernprogrammhersteller tätig werden müssen. Die Modulautoren können insbesondere Drehbuchdateien in Heimarbeit bei sich zu Hause erstellen. Wird beispielsweise ein Lernprogramm für das Erlernen von Japanisch erstellt, können die entsprechenden Tondateien durch einen Mediendateihersteller in Japan erzeugt werden, wohingegen das Drehbuch durch einen deutschen Lernmodulautor in Deutschland oder durch einen japanischen Lernmodulautor in Japan erstellt werden kann.

Das erfindungsgemäße Verfahren zur dezentralen Erstellung eines modular aufgebauten Lernprogramms, wie es in Fig. 1 dargestellt, ist für beliebige Lerninhalte einsetzbar, wobei über das Internet eine weltweite Verbindung von Experten bzw. Fachleuten möglich ist.

Sind die verschiedenen Arbeitsstationen der Modulautoren 9, 10, 11 sowie die Arbeitsstationen der Mediendateihersteller 15, 16 mit der Datenverarbeitungsanlage 2 vernetzt, kann der Lernprogrammhersteller den Bearbeitungsstatus der verschiedenen Dateien abfragen und somit den Zeitablauf zur Abarbeitung des Kundenauftrags überwachen.

Bei der Lernprogrammmodul-Datenbank 4, der Modulautor-Datenbank 5 sowie der Mediendateihersteller-Datenbank 17 kann es sich um SQL-Datenbanken handeln. Das erfindungsgemäße Verfahren kann durch zusätzliche Funktionen erweitert werden, beispielsweise kann die Kostenabrechnung mit den hauptsächlich freiberuflich tätigen Modulautoren sowie Mediendateiherstellern bei der Auftragsvergabe mit integriert werden, so daß etwa der Modulautor A an der Arbeitsstation 9 nach Ablauf eines Monats für die von ihm erstellten Drehbuchdateien ein bestimmtes Entgelt von dem Lernprogrammhersteller erhält. Hierdurch wird eine höhere Arbeitsflexibilisierung erreicht.

Die im Zusammenhang mit Fig. 1 beschriebenen Arbeitsabläufe können mehrfach wiederholt werden. Die durch den Modulautor A an der Arbeitsstation 9 erstellte Drehbuchdatei, die der Datenverarbeitungsanlage 2 über die Datennetzleitung 12 zugeleitet wird, wird vorzugsweise mittels eines Korrekturtools überarbeitet und dem Modulautor zur weiteren Bearbeitung zurückgesandt.

Die durch die Mediendateihersteller erzeugten Mediendateien werden mit der zugehörigen Drehbuchdatei durch die Datenverarbeitungsanlage 2 zu einem ablauffähigen Lernprogrammmodul verknüpft. Die ablauffähigen Lernprogrammmodule werden dann in der Lernprogrammmodul-Datenbank 4 abgespeichert. Nachdem alle notwendigen Lernprogrammmodule für ein ablauffähiges Lernprogramm erstellt worden sind, werden die ablauffähigen Lernprogrammmodule durch die Datenverarbeitungsanlage 2 zu dem modular aufgebauten Lernprogramm 1 zusammengesetzt.

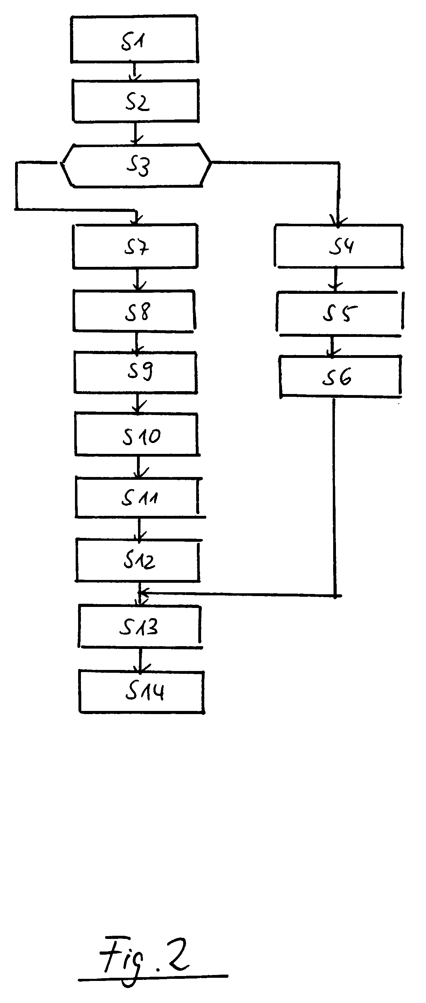

Fig. 2 stellt das erfindungsgemäße Verfahren zur dezentralen Erstellung eines modular aufgebauten Lernprogramms als Ablaufdiagramm dar. In dem Schritt S1 werden die Kundendaten in der Arbeitsstation 3 des Kunden eingelesen und eine Lernprogramm-Beschreibungsdatei zur Beschreibung des zu erstellenden Lernprogramms mit mehreren Lernprogrammmodul-Beschreibungsdatensätzen erzeugt.

Im Schritt S2 wird in der Lernmodul-Datenbank 4 nach vorhandenen Lernprogrammmodulen, deren Lernprogrammmodul-Beschreibungsdatensätze mit einem der Lernprogrammmodul-Beschreibungsdatensätze des zu erstellenden Lernprogramms übereinstimmt, durchsucht.

Im Schritt S3 wird überprüft, ob derartige Lernprogrammmodule in der Lernmodul-Datenbank 4 bereits abgespeichert sind. Falls dies der Fall ist, werden die entsprechenden Lernprogrammmodule im Schritt S4 in einen internen Speicher der Datenverarbeitungsanlage 2 des Lernprogrammherstellers geladen und mittels einer Anzeigeeinrichtung im Schritt S5 angezeigt. Im Schritt S6 werden dann die vorhandenen Lernprogrammmodule ausgewählt.

Wird im Schritt S3 festgestellt, daß ein bestimmtes Lernprogrammmodul nicht vorhanden ist, wird im Schritt S7 eine zugehörige Leerdrehbuchdatei für dieses Lernprogrammmodul erzeugt. Die erzeugte Leerdrehbuchdatei wird im Schritt S8 an einen geeigneten Lernprogrammmodulautor übertragen. Hierzu wird vorzugsweise der geeignete Lernprogrammmodulautor mittels der Modulautor-Datenbank 4 entsprechend dem Inhalt des Lernprogrammmodul-Beschreibungsdatensatzes ermittelt.

Nach dem Übertragen der Leerdrehbuchdatei im Schritt S8 an den Modulautor gibt dieser im Schritt S9 die Inhalts- und Anweisungsdaten mit Hilfe des Drehbucheditors in die Leerdrehbuchdatei zur Erzeugung einer vollständigen Drehbuchdatei ein.

Im Schritt S10 werden aus der Drehbuchdatei die Medienlistendateien generiert und vorzugsweise anhand des Objekttyps durch einen Dateifilter gefiltert, wobei mehrere Medienlistendateien für jeweils unterschiedliche Objekttypen erzeugt werden.

Im Schritt S11 werden die gefilterten Medienlistendateien an entsprechende Mediendateihersteller zur Herstellung von Mediendateien des bestimmten Objekttyps übertragen. Die Mediendateihersteller generieren aus der Medienlistendatei Mediendateien, wie beispielsweise Graphikdateien oder Audiodateien.

Im Schritt S12 werden die durch die Mediendateihersteller erzeugten Mediendateien an die Datenverarbeitungsanlage 2 übertragen und dort mit der zugehörigen Drehbuchdatei zur Erzeugung eines ablauffähigen Lernprogrammmoduls verknüpft. Im Schritt S13 wird ein in den Schritten S7 bis S12 erzeugte ablauffähige Lernprogrammmodul oder ein in der Lernmodul-Datenbank 4 aufgefundene Lernprogrammmodul mit weiteren Lernprogrammmodulen zu einem ablauffähigen gesamten Lernprogramm 1 zusammengesetzt. Die Zusammensetzung der Lernprogrammmodule erfolgt mit Hilfe der in der Lernprogrammmodul-Beschreibungsdatei abgespeicherten Strukturdaten, die die Stellung der Lernprogrammmodule innerhalb der Gesamtstruktur eines zu erstellenden Lernprogramms angeben.

Das in den Schritten S7 bis S12 erzeugte neue Lernprogrammmodul wird im Schritt S13 gleichzeitig in der Lernprogrammmodul-Datenbank 4 abgespeichert.

Im Schritt S14 wird das zusammengesetzte Lernprogramm auf einen Datenträger übertragen, zum Herunterladen über ein Datennetz abgespeichert oder ausgedruckt. Der Datenträger kann beispielsweise aus einer CD-ROM oder einer Diskette bestehen. Das Datennetz zum Herunterladen des Lernprogramms ist vorzugsweise das Internet. Das Lernprogramm kann aber auch in einem Intranet oder einem Extranet geladen werden. Das Herunterladen des zusammengesetzten Lernprogramms über ein Datennetz bietet Online-Kommunikationsmöglichkeiten der lernenden Personen, wie beispielsweise die synchrone gemeinsamen Bearbeitung einer gestellten Aufgabe durch verschiedene lernende Personen an verschiedenen Orten oder die Bildung von virtuellen Lerngruppen. Dabei können die Lerninhalte zentral verwaltet werden, wobei Änderungen der Lerninhalte jederzeit zentral erfolgen können. Die Lernprogramme können dabei im Internet bzw. in weiteren externen Datenbanken integriert werden.

Durch das erfindungsgemäße Verfahren zur dezentralen Erstellung eines modular aufgebauten Lernprogramms können mit geringem zeitlichen Aufwand sowie mit geringem Arbeitsaufwand sowohl CBT-Lernprogramme als auch WBT-Lernprogramme erstellt werden. Dabei ist der gesamte Produktionsprozess optimiert.

Bei dem erfindungsgemäßen Verfahren zur dezentralen Erstellung eines modular aufgebauten Lernprogramms sind erstellte CBT-Lernprogrammmodule (Computer based training) automatisch in WBT-Lernprogrammmodule konvertierbar. Um eine hohe Effizienz und Qualtität bei der Konvertierung zu gewährleisten, sind hierzu standardisierte Datenstrukturen vorgesehen, mit deren Hilfe die fertigen Offline-CBT-Module in Online verwendbare WBT-Module übersetzt werden können. Die Konvertierung bzw. Umsetzung erfolgt dabei mit Hilfe einer sogenannten WBT-Basisdatenstruktur, die verschiedene Datengrundgerüste für HTML-Seiten zur Verfügung stellt. Ferner existieren verschiedene Applikationen, in die dynamische, laufend aktualisierte Elemente, sogenannte Applets eingebunden sind, die nicht einmalig geladen, sondern permanent online aktualisiert werden. Hierdurch können beispielsweise Interaktionen mit dem erstellten Lernprogramm implementiert werden.

Die automatische Übersetzung der CBT-Lernprogrammmodule in WBT-Lernprogrammmodule erfolgt für verschiedene Standardkomponenten wie Styleguide konforme Texte, Styleguide konforme Graphikelemente, Mediendateiaufrufe, Standardlernaufgaben sowie für den sukzessiven Aufbau der Bildschirmelemente und Ein- und Ausblendeffekte. Darüber hinaus beinhalten die WBT-Basisdatenstrukturen Informationen über die gesamte Lernprogrammstruktur und über die Lernprogrammmodulstruktur. Jedem Objekt bzw. Datenelement innerhalb des CBT-Lernprogrammmoduls werden in der WBT-Basisdatenstruktur Objekteigenschaften zugeordnet. Beispielsweise werden für Graphikelemente die Eigenschaften Größe, Position, Transparenz, Dateiname und Datenpfad in der WBT-Basisdatenstruktur abgespeichert. Für ein Audio-Element werden vorzugsweise die Zeitdauer (in Millisekunden), Datennamen und der Datenpfad abgespeichert. Für Textfelder, Textblöcke, Bedienungsanweisungen, Hinweistexte, Merktexte, Lauftexte innerhalb des Lernprogrammmoduls werden die Eigenschaften Textinhalt, Schriftsatz, Schriftgröße, Schriftsatzfarbe, Hintergrundfarbe und Position in der WBT-Basisdatenstruktur hinterlegt. Für Templates-Seiten wird in der WBT-Basisdatenstruktur der Seitentitel und die Modulüberschrift sowie das Grundraster abgespeichert.

Mit den für jedes Datenobjekt des CBT-Lernprogrammmoduls innerhalb der WBT-Basisdatenstruktur abgespeicherten Objekteigenschaften wird eine automatische Konvertierung der CBT-Lernprogrammmodule in WBT-Lernprogrammmodule mittels eines CBT-/WBT-Generators ermöglicht. Diese automatisch erzeugten WBT-Lernprogrammmodule sind dann zum Herunterladen von einem Datennetz oder zum interaktiven Lernen über ein Datennetz beispielsweise über das Internet bereit. Sowohl für die CBT- als auch für die WBT-Lernprogrammmodule werden Lernprogrammmodul-Beschreibungsdatensätze erzeugt und in der Lernprogrammmodul-Datenbank 4 zum Wiederauffinden gespeichert.

Durch das erfindungsgemäße Verfahren zur dezentralen Erstellung eines modular aufgebauten Lernprogramms mit dem in Fig. 2 dargestellten Arbeitsablauf wird die Erstellung eines Lernprogramms erheblich vereinfacht. Die Arbeitsabläufe können parallelisiert werden, wodurch die notwendige Herstellungszeit beträchtlich gesenkt wird. Bereits vorhandene Lernprogrammmodule können aufgefunden und mehrfach verwendet werden, wodurch die Kosten zur Erstellung des Lernprogramms bei entsprechendem Datenbankbestand erheblich sinken. Die Modulautoren und Mediendateihersteller können dezentral von dem Lernprogrammhersteller angesiedelt werden, wodurch die Einbindung externer Fachleute in den Herstellungsprozeß erheblich erleichtert wird.

Das erfindungsgemäße Verfahren zur dezentralen Erstellung eines modular aufgebauten Lernprogramms fördert eine sinnvolle Arbeitsteilung und somit die Qualität und Vielseitigkeit des Lernprogramms. Gleichzeitig wird ein einheitliches Erscheinungsbild des letztendlichen Lernprogramms sichergestellt, indem die Modulautoren bezüglich der formalen Gesichtspunkte der Lernprogrammgestaltung festgelegt sind.

Darüber hinaus wird bei einer bevorzugten Ausführungsform des erfindungsgemäßen Verfahrens zur dezentralen Erstellung eines modular aufgebauten Lernprogramms eine zentrale Auftragsüberwachung durch den Lernprogrammhersteller gewährleistet, wodurch die Verwaltungs- und Abrechnungskosten erheblich vermindert werden können. Gleichzeitig kann der Bearbeitungsstatus für ein Lernprogramm zu jedem Zeitpunkt ermittelt werden, so daß eine rechtzeitige, dem Kundenwunsch entsprechende Erstellung des Lernprogramms sichergestellt ist. Bezüglich des Lerninhalts ist das erfindungsgemäße Verfahren zur Erstellung eines modular aufgebauten Lernprogramms universell einsetzbar.

## Patentansprüche

1. Verfahren zur dezentralen Erstellung eines modular aufgebauten Lernprogramms mit den folgenden Schritten:
(a) Erzeugen einer Lernprogramm-Beschreibungsdatei zur Beschreibung des zu erstellenden Lernprogramms, die mehrere Lernprogrammmodul-Beschreibungsdatensätze aufweist,
(b) Suchen in einer Lernprogrammmodul-Datenbank (4) nach vorhandenen Lernprogrammmodulen, deren Lernprogrammmodul-Beschreibungsdatensatz mit einem der Lernprogrammmodul-Beschreibungsdatensätze des zu erstellenden Lernprogramms übereinstimmt,
(c) Erzeugen von Leerdrehbuchdateien für jedes Lernprogrammmodul, für das kein übereinstimmender Lernprogrammodul-Beschreibungsdatensatz aufgefunden wurde,
(d) Übertragen der Leerdrehbuchdateien an Lernprogrammmodul-Autoren-Arbeitsstationen (9, 10, 11) entsprechend den Lernprogrammodul-Beschreibungsdatensätzen,
(e) Eingabe von Inhalts- und Anweisungsdaten in die Leerdrehbuchdateien durch den jeweiligen Lernprogrammmodul-Autor zur Erzeugung einer Drehbuchdatei,
(f) Erzeugen von Medienlistendateien aus den Drehbuchdateien,
(g) Übertragen der Medienlistendateien an Mediendateihersteher-Arbeitsstationen (15, 16) zur Herstellung von Mediendateien,
(h) Verknüpfen der Mediendateien und der Drehbuchdatei zur Erzeugung eines ablauffähigen Lernprogrammmoduls,
(i) Zusammensetzen der in der Lernprogrammmodul-Datenbank(4) aufgefundenen Lernprogrammmodule und der erzeugten ablauffähigen Lernprogrammmodule zu dem modular aufgebauten Lernprogramm (1).

2. Verfahren zur dezentralen Erstellung eines modular aufgebauten Lernprogramms nach Anspruch 1, dadurch gekennzeichnet, daß die erzeugten ablauffähigen Lernprogrammmodule in der Lernprogrammmodul-Datenbank (4) abgespeichert werden.

3. Verfahren zur dezentralen Erstellung eines modular aufgebauten Lernprogramms nach Anspruch 1 oder 2, dadurch gekennzeichnet, daß die Lernprogrammmodul-Beschreibungsdatei Strukturdaten, Dateibeschreibungsdaten und Modulbeschreibungsdaten enthält.

4. Verfahren zur dezentralen Erstellung eines modular aufgebauten Lernprogramms nach Anspruch 3, dadurch gekennzeichnet, daß die Strukturdaten die Stellung des Lernprogrammmoduls innerhalb der Gesamtstruktur des zu erstellenden Lernprogramms angeben.

5. Verfahren zur dezentralen Erstellung eines modular aufgebauten Lernprogramms nach Anspruch 3, dadurch gekennzeichnet, daß die Dateibeschreibungsdaten den Dateinamen, das Dateierstellungsdatum, die Versionsnummer sowie Namen der Bearbeitungspersonen beinhalten.

6. Verfahren zur dezentralen Erstellung eines modular aufgebauten Lernprogramms nach Anspruch 3, dadurch gekennzeichnet, daß die Modulbeschreibungsdaten den Modultitel, das Modullernziel, die benötigte Modullernzeit sowie die Zielgruppe des Lernprogrammmoduls beinhalten.

7. Verfahren zur dezentralen Erstellung eines modular aufgebauten Lernprogramms nach einem der Ansprüche 1 bis 6, dadurch gekennzeichnet, daß die erzeugte Leerdrehbuchdatei Auftragsverwaltungsdaten enthält, die den Namen des Lernprogrammmodul-Autors, das Datum der Übertragung der Leerdrehbuchdatei an den Lernprogrammmodul-Autor, das erwartete Datum der Übertragung der Drehbuchdatei sowie den Bearbeitungsstatus der Drehbuchdatei beinhalten.

8. Verfahren zur dezentralen Erstellung eines modular aufgebauten Lernprogramms nach Anspruch 7, dadurch gekennzeichnet, daß der Name des Lernprogrammmodul-Autors ermittelt wird, indem eine Lernprogrammmodul-Autoren-Datenbank (5) anhand des Lernprogrammmodul-Beschreibungsdatensatzes nach einem geeigneten Lernprogrammmodul-Autor durchsucht wird.

9. Verfahren zur dezentralen Erstellung eines modular aufgebauten Lernprogramms nach einem der vorangehenden Ansprüche, dadurch gekennzeichnet, daß die erzeugte Leerdrehbuchdatei Kundendaten enthält, die den Kunden, für den das Lernprogramm erstellt wird, angeben.

10. Verfahren zur dezentralen Erstellung eines modular aufgebauten Lernprogramms nach einem der vorangehenden Ansprüche, dadurch gekennzeichnet, daß die erzeugte Leerdrehbuchdatei Leerdrehbuchseiten aufweist, die hinsichtlich des Formats, der Typographie, dem Layout oder hinsichtlich ihrer farblichen Gestaltung durch die Kundendaten festgelegt und durch den Lernprogrammmodul-Autor diesbezüglich nicht veränderbar sind.

11. Verfahren zur dezentralen Erstellung eines modular aufgebauten Lernprogramms nach einem der vorangegangenen Ansprüche, dadurch gekennzeichnet, daß die Drehbuchdatei mittels eines Drehbucheditors erzeugt wird, bei dem die Anweisungsdaten in ein Anweisungseingabefenster und die Inhaltsdaten in ein Editoreingabefenster eingegeben werden.

12. Verfahren zur dezentralen Erstellung eines modular aufgebauten Lernprogramms nach Anspruch 11, dadurch gekennzeichnet, daß die eingegebenen Inhaltsdaten Text und Graphikobjekte sowie Interaktionsobjekte beinhalten, die in dem Editoreingabefenster durch den Lernprogrammmodul-Autor erzeugt und bearbeitet werden.

13. Verfahren zur dezentralen Erstellung eines modular aufgebauten Lernprogramms nach Anspruch 11 oder 12, dadurch gekennzeichnet, daß in dem Anweisungseingabefenster eine Anweisungstabelle für jedes in dem Editoreingabefenster erzeugte Objekt generiert wird.

14. Verfahren zur dezentralen Erstellung eines modular aufgebauten Lernprogramms nach Anspruch 11, dadurch gekennzeichnet, daß der Drehbucheditor für jedes in dem Editorfenster erzeugte Objekt einen Objektnamen vergibt, der in der Anweisungstabelle angezeigt wird.

15. Verfahren zur dezentralen Erstellung eines modular aufgebauten Lernprogramms nach Anspruch 13 oder 14, dadurch gekennzeichnet, daß in die Anweisungstabelle zusätzlich Datenobjekte aufgenommen werden, die in dem Editoreingabefenster nicht angezeigt werden, insbesondere Geräuschtonobjekte, Musiktonobjekte, Sprechtexttonobjekte, Regieanweisungstextobjekte, Aufgabenbeschreibungstextobjekte und Interaktionsbeschreibungstextobjekte.

16. Verfahren zur dezentralen Erstellung eines modular aufgebauten Lernprogramms nach einem der vorangehenden Ansprüche 13 bis 15, dadurch gekennzeichnet, daß die Anweisungstabelle der Drehbuchdatei einen Objekttyp, eine Objektbeschreibung und den Objektnamen enthält.

17. Verfahren zur dezentralen Erstellung eines modular aufgebauten Lernprogramms nach einem der vorangehenden Ansprüche, dadurch gekennzeichnet, daß die aus der Drehbuchdatei erzeugten Medienlistendateien nach ihrem Objekttyp sortiert und abhängig von diesem Objekttyp an unterschiedliche Mediendateihersteller übertragen werden.

18. Verfahren zur dezentralen Erstellung eines modular aufgebauten Lernprogramms nach Anspruch 17, dadurch gekennzeichnet, daß der Mediendateihersteller ermittelt wird, indem eine Mediendateihersteller-Datenbank (17) anhand des Objekttyps nach einem geeigneten Mediendateihersteller durchsucht wird.

19. Verfahren zur dezentralen Erstellung eines modular aufgebauten Lernprogramms nach einem der vorangehenden Ansprüche, dadurch gekennzeichnet, daß die Übertragung der Leerdrehbuchdateien, der Drehbuchdateien und der Medienlistendateien mittels eines Datennetzes oder mittels tragbarer Datenträger erfolgt.

20. Verfahren zur dezentralen Erstellung eines modular aufgebauten Lernprogramms nach Anspruch 19, dadurch gekennzeichnet, daß die Übertragung der Dateien über das Internet erfolgt.

21. Verfahren zur dezentralen Erstellung eines modular aufgebauten Lernprogramms nach einem der vorangegangenen Ansprüche, dadurch gekennzeichnet, daß das Erzeugen der Lernprogramm-Beschreibungsdatei, das Erzeugen der Leerdrehbuchdatei, das Verknüpfen der Mediendatei und der Drehbuchdatei und das Zusammensetzen der Lernprogrammmodule zentral bei einem Lernprogrammhersteller erfolgt, daß die Drehbuchdateien räumlich entfernt dezentral bei einem Lernprogrammmodul-Autor erzeugt werden, und daß die Mediendateien räumlich entfernt dezentral bei einem Mediendateihersteller erzeugt werden.

22. Verfahren zur dezentralen Erstellung eines modular aufgebauten Lernprogramms nach einem der Ansprüche 7 bis 21, dadurch gekennzeichnet, daß der Bearbeitungsstatus der Drehbuchdateien und der Mediendateien durch den Lernprogrammhersteller über ein Datennetz abfragbar ist.

23. Verfahren zur dezentralen Erstellung eines modular aufgebauten Lernprogramms nach einem der vorangehenden Ansprüche, dadurch gekennzeichnet, daß das zusammengesetzte Lernprogramm (1) auf einen Datenträger übertragen wird oder über ein Datennetz von einem Benutzer geladen werden kann.
